# EUROPEAN PATENT APPLICATION

(11) **EP 4 851 898 A1**
(43) Date of publication of application: **09.12.2026**
(21) Application number: 25181300.2
(22) Date of filing: 06.06.2025
(51) Int. Cl.: G06Q 20/06, G06Q 20/36, G06Q 20/38

(54) **SECURE HARDWARE UNIT, TOKEN REFERENCE REGISTER, SYSTEM AND METHOD FOR ESTABLISHING INDIVIDUAL CREDIT**

(71) Applicant: Giesecke+Devrient advance52 GmbH, 81677 München (DE)
(72) Inventor: HUPEL, Lars, 81677 München (DE); BOHN, Markus, 81677 München (DE)
(74) Representative: Ter Meer und Partner mbB

(57) **Abstract**

A secure hardware unit for establishing individual credit is provided. The secure hardware unit comprises a storage unit which is configured to store one or more tokens or a link to one or more tokens. A combined monetary value of the one or more tokens stored in the storage unit is lower than a predetermined monetary value. The predetermined monetary value is some monetary value desired by a user, e. g., to be used in a payment transaction or token transaction. The predetermined monetary value may correspond to or equal a monetary value required for a payment transaction. The secure hardware unit further comprises a control unit which is, when offline, configured to generate a cryptographic key pair comprising a cryptographic private key and a cryptographic public key. Moreover, the secure hardware unit is configured to generate a pocket token minting request. Moreover, the secure hardware unit is configured to generate a pocket token by assigning the pocket token minting request; an identifier of a service provider unit of the secure hardware unit; and the requested value to the cryptographic private key, wherein the requested value is asynchronous to assets on a reference account of the secure hardware unit.

## Description

The present invention relates to a secure hardware unit, a system comprising one or more of the secure hardware units and a method corresponding to the secure hardware unit, each of which is configured to support establishing individual credit in an offline scenario. In particular, the secure hardware unit is configured to generate or mint pocket tokens on request, i. e., tokens that are initially not covered by own assets, wherein the system is configured to settle the individual credit subsequently with own assets.

Tokens - also referred to as digital assets, electronic coins, coin data sets - may represent any digital asset, in particular a digital currency, preferably a central bank digital currency, short CBDC. Conventionally, these tokens are minted (e.g. created) by an issuing unit or token issuing unit. These tokens are melted (e.g. destroyed) by the issuing unit or a dismissing unit of the token transaction system. The issuing unit and/or dismissing unit may be an issuing authority, or a central bank unit or a commercial bank unit.

Electronic token transactions and/or storage of tokens and any associated transaction data and/or storage data must be safe and secure and so, means for protecting confidentiality, integrity, and availability of exchanged and/or stored token data must be implemented. This is true for electronic payment transactions and associated payment transactions and payment storages in which a monetary value is linked with each token, subsequently also referred to as a token value.

According to one technical approach for a digital asset e.g., digital currency such as central bank digital currency, CBDC, issued by a central bank, as for instance described in WO 2020 / 212 331 A1 or WO 2023 / 036 458 A1, tokens are stored in a local token management unit to be directly exchanged between participants of an electronic payment transaction system. The transferred token can validly be used after receipt from another participant without a need of approval or verification via an online connection. So, if an online connection is not available or inconvenient or should not be used for a specific token transaction, it remains possible to validly transfer tokens directly between participants in the electronic payment transaction system. For security-, verification- and registration-purposes, a token register stores token references of all valid tokens without knowing the tokens itself. So, the user can check validity of a received token. The token register only stores token references of the corresponding token. Tokens can be switched, split or merged by each individual participant, e.g., ownership of tokens can be switched from one participant to another participant, tokens can be split into plural tokens, e.g., for obtaining a token with a reduced monetary value and/or plural tokens can be merged to a single token, e.g., for obtaining a token with a higher monetary value.

Each participant in the electronic payment transaction system according to the third approach comprises a transaction unit or token management unit that is assigned to him. Each of these transaction units enable a high standard for security, confidentiality and safety regarding payment transactions and are therefore referred to as secure transaction units. The transaction unit is also known as wallets or token-wallets.

A wallet can be provided as a hardware wallet, e.g. as a smart card issued to a participant, or can be a so-called hosted-wallet, e.g. a wallet that is hosted by the individual service provider. A wallet may be hosted in a terminal device. The wallet may be an embedded wallet.

In conventional electronic payment transaction systems tokens can only be minted, i.e. created, or melted, i.e. destroyed, by central authorized agencies like a token issuing unit and/or the central bank, CB due to security reasons. An example for a central token issuing unit is described in WO 2022/008319 A1. In this context, the term "minting" includes a generation or creation of a new token that has not been present in the entire transaction system and the registration of the generated new token, in particular the registration of the token reference of the generated new token, in a central token register. In this context, the term "melting" includes a destruction, removal or withdrawal of a token, a credit note for the monetary value associated with the melted token, and the deletion of the token within the entire transaction system, in particular the deletion of the token reference of the to-be-deleted token, in the token register. Therefore, in conventional electronic payment systems, no user, be it financial service provider like commercial banks or merchants or end users, is authorized to mint or melt a token in the electronic payment system. The users are only authorized to execute token transactions thereby modifying existing tokens of the electronic payment system.

In the electronic payment transaction system, each token includes a monetary value that is redeemable with a central authority, a service provider, and/or a financial service provider, preferably of the respective secure hardware unit.

Due to the centralized token creation and deletion, a working online connection to the token issuing unit is generally required to receive new tokens corresponding to new monetary value. This requirement imposes a strong usability limitation of the electronic payment transaction system in situations in which the wallet of a user is both offline and too empty, i. e., lacks one or more tokens having a corresponding monetary value for a desired payment transaction.

WO 2022/178184 A1 relates to a method according to which a sender device generates a base token which includes parameters of a token space and an amount. The sender device further signs the base token to form a minted token that can be transmitted in a transfer request. The token space is implemented using a blockchain or a conventional database and therefore requires an online connection for access.

Hence, there is a need to provide a decentral possibility for minting or melting a token of an electronic payment system in an offline scenario without disregarding security aspects. Moreover, there is a need to provide a corresponding secure hardware unit, method and system.

The above-identified objectives are solved with the features of the independent patent claims. Further advantageous embodiments are described in the dependent patent claims.

In one independent aspect of the present invention, a secure hardware unit for establishing individual credit is provided. The secure hardware unit comprises a storage unit which is configured to store one or more tokens or a link to one or more tokens. A combined monetary value of the one or more tokens stored in the storage unit may be lower than a predetermined monetary value. The predetermined monetary value may be some monetary value desired by a user, e. g., to be used in an electronic payment transaction or token transaction. The predetermined monetary value may correspond to or equal a monetary value required for an electronic payment transaction. The secure hardware unit further comprises a control unit which is, when offline, i. e., in an offline environment, configured to generate a token individual cryptographic key pair comprising a cryptographic private key and a cryptographic public key. Moreover, the secure hardware unit is configured to select a requested value, wherein the requested value is asynchronous to assets on a reference account of the secure hardware unit . Moreover, the secure hardware unit is configured to generate a pocket token reference by assigning the requested value to the cryptographic public key. Moreover, the secure hardware unit is configured to generate a pocket token by assigning the requested value to the cryptographic private key. Moreover, the secure hardware unit is configured to generate a registration request including the pocket token reference and an identifier configured to identify the secure hardware unit in the electronic payment transaction system. Moreover, the control unit is configured to attach the registration request to the pocket token, thereby providing the pocket token as individual credit for an electronic payment transaction.

In another independent aspect of the present invention, a method for establishing individual credit in an electronic payment transaction system is provided. The method is configured to be executed by a control module of a secure hardware unit, preferably according to an aspect of the present invention. The method comprises generating a token individual cryptographic key pair comprising a cryptographic private key and a cryptographic public key. Moreover, the method comprises selecting a requested value, wherein the requested value is asynchronous to assets on a reference account of the secure hardware unit; generating a pocket token reference by assigning the requested value to the cryptographic public key; generating a pocket token by assigning the requested value to the cryptographic private key; and generating a registration request including the pocket token reference and an identifier configured to identify the secure hardware unit. The method further comprises attaching the registration request to the pocket token, thereby providing the pocket token as individual credit for an electronic payment transaction.

In another independent aspect of the present invention, a secure token reference register for registration and/or verification of tokens within an electronic payment transaction system is provided. The secure token reference register comprises a control module and a storage module, wherein the control module is configured to: receive a first registration request generated by a secure hardware unit of the electronic payment transaction system, wherein the first registration request includes a token reference; and store the token reference in the storage module, thereby registering a corresponding token. The control module is further configured to receive a second registration request generated by a secure hardware unit according to an aspect of the present invention; extract the identifier from the second registration request; settle the requested value with a service provider unit of the secure hardware unit according to an aspect of the present invention based on the identifier. Upon receiving a settlement confirmation from the service provider unit, the control module is configured to store the pocket token reference in the storage module, thereby registering the pocket token. Preferably, the control module is further configured to transmit a response to the secure hardware unit and/or the secure hardware unit according to an aspect of the present invention, the response including a registration confirmation.

In another independent aspect of the present invention, an electronic payment transaction system is provided. The electronic payment transaction system comprises a plurality of secure hardware units of which at least one secure hardware unit is configured according to an aspect of the present invention. The system further comprises a secure token reference register according to an aspect of the present invention; and a service provider unit, preferably an issuer, of the at least one secure hardware unit.

In another independent aspect of the present invention, a computer-readable storage medium is provided. Instructions are stored on the computer-readable storage medium, which, when executed by a secure hardware unit according to an aspect of the present invention, configure the control unit of the secure hardware unit to execute the method according to an aspect of the present invention.

The gist of the invention is to empower a secure hardware unit in a well-defined exceptional situation to locally mint a special type of token which may be used in an electronic payment transaction. This functionality of the secure hardware unit builds an exception to the conventional electronic payment transaction system requirement according to which tokens are only allowed to be minted by a central authority such as a token issuer unit. The exception applies only in special circumstances or boundary conditions, i. e., when the secure hardware unit is offline such that no centrally minted token is accessible if needed. In other words, the exception is a pocket in the conventional electronic payment transaction system. By attaching to the generated pocket token a registration request including the identifier of the secure hardware unit that locally minted the pocket token, it is ensured that the pocket token is always distinguishable from a centrally minted token and indicates its liable party. The identifier of the secure hardware unit may indicate the end user and, preferably the service provider unit as the liable party of the secure hardware unit. A locally minted pocket token therefore ensures trustworthiness and a high standard security.

The term "offline" may mean that the secure hardware unit has no connection to any backend system, neither directly nor indirectly, which may further involve that all transaction partners have no direct or indirect connection to any backend system. Accordingly, neither the secure token reference register nor the service provider unit nor a token issuer is accessible in such an offline environment or when offline. When online, in contrast, the secure element may be connected to a backend system through the internet or a mobile communication network, including local networks.

The term "pocket token" refers to a token that is locally minted in an offline scenario and originally not covered by or converted from an asset of the user of the secure hardware unit across systems. The assets of a user may consist of a portion that is available as tokens in the electronic payment transaction system, also referred to as token portion, and a portion that is not available as tokens in the electronic payment system, however, available in at least one further system, and for simplicity referred to as non-token portion. The non-token portion may be stored or held at least partially on the reference account of the secure hardware unit. To increase the token portion conventionally requires a synchronized decrease/debiting of the non-token portion, in particular of the non-token portion held in the reference account. When locally minting a pocket token on a secure hardware unit, the token portion of the user temporarily increases without synchronously decreasing the non-token portion, e. g., by debiting the reference account of the user. Thus, the monetary value of the pocket token is not synchronized with the non-token portion and therefore asynchronous to the assets of the user, in particular to the assets on the reference account of the secure hardware unit. In other words, the term "asynchronous to assets on a reference account of the secure hardware unit" may refer to the requested value not being covered by the assets owned by the (end) user of the secure hardware unit. The requested value is asynchronous to the assets on the reference account of the secure hardware unit since upon minting the corresponding pocket token in the offline environment, the assets of the corresponding user are not charged/debited with a value corresponding to the requested (monetary) value of the pocket token, in contrast to the conventional case of issuing new (centrally minted) tokens.

In the following, a centrally minted token may be referred to as token and a locally minted token may be referred to as pocket token.

The (data) structure of the pocket token and the centrally minted token or regular token may be identical. The pocket token includes a cryptographic private key and the requested value. A centrally minted token includes a cryptographic private key and a monetary value. For each one of the pocket token and the token, a reference is generated which includes at least the respective cryptographic public key, and preferably also the respective value. The pocket token reference and/or the token reference allow an identification of the pocket token and/or token in public, i. e., within the electronic payment transaction system. Optionally, one or more registration requests may be attached to a token and transferred with the token. For the pocket token, it is required to attach the registration request, which may distinguish the pocket token from a token due to the structure of the registration request. Previously known registration requests do not include an identifier configured to identify the secure hardware unit as data element of the registration request. For the pocket token, the identifier enables to encode the origin of the pocket token in order to identify a liable party for the requested value of the pocket token.

The secure hardware unit, the method and/or the system may include at least one of the following aspects.

The requested value may be a monetary value that is requested by a user via his or her secure hardware unit. The requested value may be or include a requested monetary value.

The cryptographic public key may be an identifier of the pocket token. A combination of the cryptographic public key and a monetary value may correspond to a centrally minted token. By further attaching the registration request to the pocket token, the pocket token may be labelled physically as being locally minted instead of centrally minted. As such, transaction partners may easily distinguish between a token and a pocket token.

The registration request may comprise a pocket token minting command which encodes the creation of a new token. Upon registering the pocket token, the pocket token minting command may cause the secure token reference register to declare or register the respective pocket token as valid.

The pocket token minting command may be stored in the storage unit, preferably within a command library or command history stored in the storage unit. The pocket token minting command may be or include "LOCAL_CREATE", "CREATE_ON_DEMAND", or the like. The registration request may be or include a concatenated list of the pocket token minting command, the pocket token reference and the identifier.

The control module may be configured to select and/or retrieve the pocket token minting command from the storage unit, preferably from the command library.

The reference account of the secure hardware unit may be any account of a user of the secure hardware unit that is debited for new tokens. In the case of minting pocket tokens, the reference account of the secure hardware unit is initially not charged. That is, minting pocket tokens may correspond to overdrawing the reference account, i. e., establishing an individual credit.

The pocket token reference may be a reference to the pocket token that can be publicly shared without endangering or even losing ownership of the pocket token. The pocket token reference may be understood in analogy of a token reference. The pocket token reference may include all data of the pocket token, wherein the cryptographic private key is exchanged with the cryptographic public key. The cryptographic public key cannot prove ownership of the pocket token, as opposed to the cryptographic private key.

The term "transaction" or "electronic payment transaction" may represent a transaction of a monetary value token between a sender and a recipient. In the offline scenario, the monetary value token may be a pocket token. A transaction of the monetary value token may represent a payment transaction, i.e., the change of an ownership of an amount of money which corresponds to the monetary values of the token or pocket token involved in the transaction. A transaction may include a request for a monetary value by the transaction partner.

The registration request may be represented as a bitcode in which the pocket token minting command, the identifier configured to identify the secure hardware unit, the requested value, the cryptographic public key, and, preferably, an identifier of the service provider (if not included in the identifier configured to identify the secure hardware unit) may be concatenated.

The secure hardware unit may also be referred to as a secure token transaction unit. The secure hardware unit includes a storage unit for storing one or more tokens, wherein each token is a monetary value token, preferably a central bank digital currency token. The storage unit may be configured to store only references or links to one or more tokens stored centrally. In this case, the one or more tokens are not directly reachable in an offline scenario, such that locally minting pocket tokens as described herein enables the user to remain capable of acting even when the corresponding secure hardware unit is offline.

The control module may be further configured to negotiate a secure payment channel with a further secure hardware unit, e. g., the secure hardware unit of a transaction partner. The control module may be further configured to exchange a pocket token with the further secure hardware unit, either acting in the payer role or in the payee role.

A secure hardware unit (as described herein) may be or include a secure hardware unit, also referred to as secure wallet, secure token management unit; token wallet; and/or wallet may be used to locally manage tokens or pocket tokens in the memory itself and/or to transform the tokens or pocket tokens and to register a token or a pocket token in the electronic token transaction system. The token or pocket token may be stored in a token storage that is also managed by the token wallet.

Each secure hardware unit may comprise one identifier, also referred to as secure token transaction unit identifier, ID, wallet-ID or wallet identification data. The identifier of the secure hardware unit may be assigned to a specific secure hardware unit for uniquely identifying the secure hardware unit in the electronic payment system. The identifier is preferably stored in the storage unit of the specific secure hardware unit.

The identifier of the secure hardware unit may be generated at the entity that issues the secure hardware unit, such as a (financial) service provider unit or a central authority in the electronic transaction system. The identifier configured to identify the secure hardware unit may therefore include at least a reference to the corresponding service provider unit, preferably an identifier of the service provider unit. For instance, the identifier of the service provider may be embedded within the identifier of the secure hardware unit. The identifier may be a public key of the secure hardware unit or a certificate of the secure hardware unit.

Alternatively, the identifier of the secure hardware unit may be generated by an official authority, a secure token issuing unit, e.g., a central bank unit. In this case, the identifier of the secure hardware unit may be received by the control means of the secure hardware unit issuing unit or the secure register unit.

In one embodiment, the secure hardware unit may be or include a secure cryptographic device, e. g., as specified according to ISO 13491-1. The secure hardware unit may be or include a device that provides physically and logically protected cryptographic services and storage, and which can be integrated into a larger system, such as an automated teller machine (ATM) or point-of-sale (POS) terminal.

The electronic payment transaction or (pocket) token transaction may be an offline transaction. That is, each transaction participant is offline, i. e., without any access to a backend system, during the transaction.

The control unit may be configured to sign the pocket token reference and/or the registration request based on a certificate of the secure hardware unit, preferably with a predetermined cryptographic private key stored in the storage unit. The predetermined cryptographic private key may be a dedicated key, i. e., a special key only used for establishing individual credit by minting pocket tokens. This signature ensures a sufficiently high security standard as it further enables backtracking of the source of the pocket token and ensures the integrity of the pocket token reference and/or registration request.

The control module may be further configured to assign an identifier of the service provider unit to the registration request.

The service provider unit may be an issuer of the secure hardware unit, in particular a financial service provider.

The control unit may be configured to compare the requested value against a predetermined minting threshold configured in the secure hardware unit. The control unit may be only configured to generate the pocket token if the requested value is smaller than the predetermined minting threshold. This feature may provide a per-request limit for the requested value. The service provider unit may set the predetermined minting threshold. The service provider unit may set the number of pocket tokens minted by the same secure hardware unit that are allowed to coexist.

Alternatively, the control unit may be configured to add the requested value to a value sum and to compare the value sum against a predetermined minting threshold. The control unit may be only configured to generate the pocket token if the value sum is smaller than the predetermined minting threshold.

The value sum may be represented by a counter, which is configured to increase based on adding the requested value, in particular consecutively, i. e., for consecutive pocket tokens or pocket token minting requests. The value sum may be also referred to as an accumulated value.

The predetermined minting threshold may be stored in the storage unit of the secure hardware unit. The predetermined minting threshold may be set, defined and/or configured by the service provider unit. The service provider unit may eventually be a liable party for covering the requested value of the pocket token. In this scenario, it is beneficial to limit the requested value or a cumulative sum of requested values to a predetermined value or minting threshold such that excessive minting of pocket tokens or minting of pocket tokens including a large monetary value can be prevented. In other words, and applying to either alternative, strong boundaries may be implemented to define the exception of the system in which a local minting of monetary value tokens is allowed.

The control unit may be further configured to store the pocket token reference or a copy of the pocket token reference in the storage unit. The control unit may be further configured to generate a further registration request including the copy of the pocket token reference and the identifier configured to identify the secure hardware unit. The control unit may be further configured to store a copy of the registration request in the storage unit.

The control unit may be further configured to transmit the registration request to a secure token reference register for settling or synchronizing the requested value with the assets on the reference account of the secure hardware unit. Upon receiving the registration request at the secure token reference register, the registration request may cause a control module of the secure token reference register to determine whether the pocket token has been paid for and/or declare or register the respective pocket token as valid. Accordingly, the pocket token may be converted to a token, i. e., it may be subsequently used in transactions without having to attach the registration request including the identifier of the secure hardware unit.

The control unit may be further configured to provide the registration request to the secure token reference register, to the service provider unit, or a central authority such as a central bank for settling or synchronizing the requested value with the assets on the reference account of the secure hardware unit. Preferably, the control unit may be configured to provide the registration request directly to the service provider unit of the secure hardware unit. Control means of the service provider unit may forward the command of the registration request to the secure token reference register along with a payment confirmation for registering the pocket token as valid token.

The control unit may be further configured to receive a response generated by the secure token reference register and/or the service provider unit; and to reset the value sum when the response includes a registration confirmation and/or a settlement confirmation, preferably by zeroing the value sum.

According to some embodiments, the control unit may be further configured to receive an acknowledgement of a pocket token reference. The acknowledgement may have been generated upon verification or registering of the pocket token reference at the secure token reference register of the electronic payment transaction system. The acknowledgement or the response may include a timestamp. The acknowledgement and/or the timestamp of the acknowledgement may be signed by an authority, e. g., the (secure) token reference register and/or a financial service provider, to prevent fake acknowledgements and timestamps provided through a malicious wallet.

The method may further include signing the pocket token reference and/or the registration request based on a certificate of the secure hardware unit or preferably a predetermined cryptographic private key stored in the storage unit.

The method may further include storing or archiving a copy of the pocket token reference and/or the registration request in the storage unit.

The method may further include comparing the requested value or a requested accumulated value against a predetermined minting threshold configured in the secure hardware unit, preferably stored in the storage unit. The method may comprise generating the pocket token only if the requested value or the requested accumulated value is smaller than the predetermined minting threshold. The requested accumulated value may correspond to the value sum. The requested accumulated value may be stored in a counter which increases based on adding the requested value.

The secure token reference register may be further configured to forward the registration request or a dedicated settlement request to the service provider unit for settling or synchronizing the requested value. The secure token reference register by be configured to debit a central liquidity management, CLM, of the service provider unit, e. g., a dedicated cash account, DCA, of the service provider with a value corresponding or equal to the requested value.

The service provider unit may be configured to receive the registration request, the settlement request, or a notification that the dedicated cash account has been debited, and to settle the requested value, in particular by debiting the reference account associated with the secure hardware unit that generated the respective pocket token with a value corresponding or equal to the request value.

The DCA may be an account for monetary settlement in connection with token transactions. The DCA is typically established and managed by the service provider unit for the secure hardware unit within the CLM. The secure token reference register (e. g., hosted by a central bank) may be configured to debit the DCA with a value corresponding to the monetary value of the pocket token, wherein the DCA may be an account of the service provider unit at the secure token reference register or the central bank hosting the secure token reference register, thereby settling the DCA.

Alternatively, the at least one secure hardware unit may be configured to provide the pocket token reference directly to the service provider unit or a further service provider unit, preferably within the registration request, for settling the requested value, preferably upon resuming an online connection.

The service provider unit may be or include a financial service provider, e. g., a commercial bank and/or represent a liable party.

Preferably, the electronic payment transaction system comprises a secure token reference register, for storing token references, pocket token references, and, optionally, references to (pocket) token transactions between two secure hardware units of the electronic payment transaction system. The secure token reference register provides further security for token transactions within the electronic payment transaction system, in particular due to online verification services of (received) tokens or pocket tokens. The use of (pocket) token references over (pocket) tokens has the further advantage of reducing communication of sensitive information such as the cryptographic private key associated with a respective token or pocket token.

In the following, the invention or further embodiments and advantages of the invention are explained in more detail based on drawings, wherein the drawings describe only embodiments of the invention. Identical components in the drawings are given the same reference signs. Elements drawn or framed with dashed lines are considered as optional elements.

The drawings are not to be regarded as true to scale, and individual elements of the drawings may be shown in exaggeratedly large or exaggeratedly simplified form.
Fig. 1 shows an exemplary embodiment of a secure hardware unit according to an aspect of the disclosure.
Fig. 2a shows an exemplary timing diagram relating to a top-up of a regular token according to prior art.
Fig. 2b shows an exemplary timing diagram relating to minting a pocket token according to an aspect of the disclosure.
Fig. 3 shows a schematic flow chart of an exemplary method according to an aspect of the disclosure.
Fig. 4 shows an exemplary embodiment of an electronic payment system including at least one secure hardware unit according to an aspect of the disclosure.
Fig. 5 shows a further exemplary embodiment of an electronic payment transaction system TS according to the disclosure.

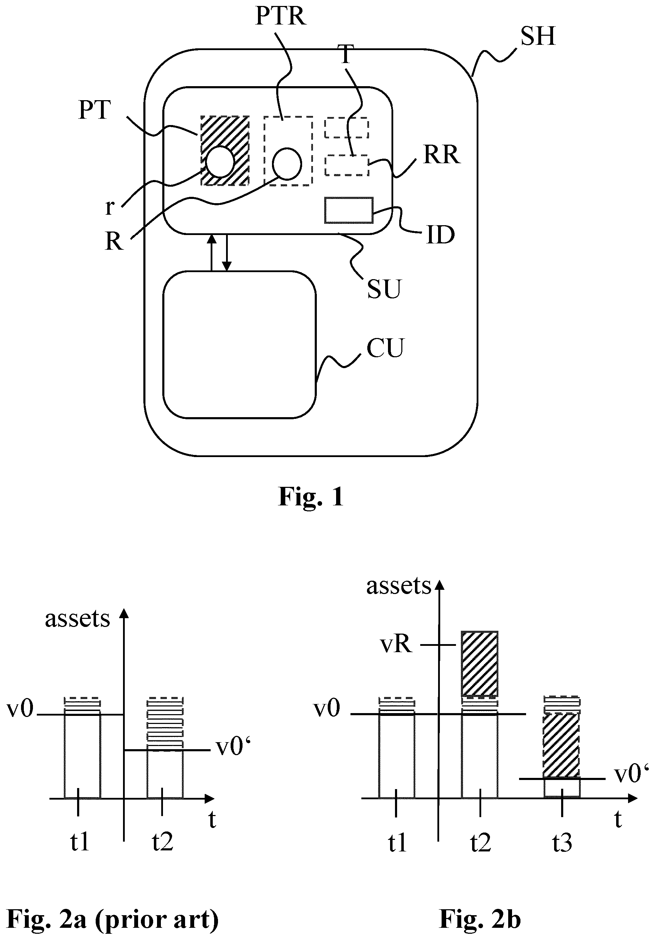

In Fig. 1 a schematic representation of an exemplary embodiment of a secure hardware unit SH according to an aspect of the disclosure is depicted. The secure hardware unit SH includes a storage unit SU and a control unit CU.

The storage unit SU may be configured to store one or more tokens or a link to one or more tokens stored somewhere else in the electronic payment transaction system TS. The storage unit SU may be configured to store an identifier ID of the secure hardware unit SH. The identifier ID of the secure hardware unit may include an identifier SI of the service provider unit SP. The storage unit SU may be configured to store a history, collection or library of commands (not shown), which may include a pocket token minting command. The storage unit SU may be configured to store the pocket token minting command. The storage unit SU may be configured to store the cryptographic key pair r, R generated for a new pocket token PT, the registration request and/or other cryptographic keys. For instance, the cryptographic private key r may be stored within the pocket token PT, and/or the cryptographic public R key may be stored within the pocket token reference PTR. The storage unit SU may be configured to store a pocket token PT, a pocket token reference PTR and/or a copy of the pocket token reference PTR.

The control unit CU is configured, when offline, to generate a cryptographic key pair r, R for a new pocket token PT including a requested monetary value vR. Preferably, the requested value vR is limited by the service provider unit SPU of the secure hardware unit SH according to a predefined rule. The control unit CU is configured to generate a registration request RR, preferably including the pocket token minting command in/from the storage unit SU. The control unit CU and the storage unit SU are operatively coupled to each other to allow exchange of data, preferably in an encrypted manner.

The control unit CU is configured to generate the pocket token PT by assigning the requested value vR to the cryptographic private key r. Similarly, the control unit CU is configured to generate the pocket token reference PTR by assigning the requested value vR to the cryptographic public key R. The requested value vR defines the monetary value corresponding to the pocket token PT. The control unit CU is configured to generate the registration request RR by including specific data. Said specific data includes the pocket token reference PTR. Said specific data includes the identifier ID of the secure hardware unit SH. This identifier ID is required to keep track of a liable party for the pocket token PT. Said specific data may further includes the pocket token minting command. Preferably, the specific data further includes the identifier SI of the service provider unit SP. In particular, the elements of the registration request RR may be concatenated to a single (bit) string value.

The control unit CU is configured to sign the pocket token reference PTR and/or the registration request RR with a private key of the secure hardware unit SH. The signature not only ensures the data integrity of the pocket token reference PTR, but also enables backtracking of the origin of the pocket token reference PTR and therefore increases transparency and thereby trustworthiness for the locally minted pocket token PT.

The control unit CU is configured to provide the pocket token PT and the pocket token reference PTR as individual credit for an electronic payment transaction. In other words, the control unit CU is configured to conduct a transaction with a further secure hardware unit SH using the pocket token PT by transmitting the pocket token PT with the registration request RR attached to it. Preferably the control unit CU is configured to generate a copy of the pocket token reference PTR and/or the registration request RR and to store the copy of the pocket token reference PTR and/or the registration request RR in the storage unit SU to keep track of the established individual credit.

In Fig. 2a and Fig. 2b the differences between topping up a token conventionally and minting a pocket token PT across systems are illustrated by way of time diagrams. The time diagram of Fig. 2a represents the top-up of a token according to prior art.

The time diagram includes a horizontal axis t, which represents a time dimension. The two points selected on the horizontal axis t refer to a first point in time t1 and a second point in time t2, which occurred later in the time dimension t.

The time diagram includes a vertical axis "assets", which represents a value of the assets of an end user of the secure hardware unit SH. These assets include assets held in a reference account of the secure hardware unit SH as depicted by the empty (white) rectangle and assets held as token which are stored directly or indirectly in the secure hardware unit SH, the latter as depicted by the rectangle having a horizontal line pattern. The assets held in the reference account may be also referred to as non-token portion of the assets and the assets held as tokens as token portion of the assets. The value v0 represents the null level of the token portion on the assets dimension.

Between the first time t1 and the second time t2, the user of the secure hardware unit SH requested a new token, in particular a new centrally minted token. Accordingly, the assets in the non-token portion are charged with the amount corresponding to the monetary value of the new token. In particular, the reference account of the secure hardware unit SH is debited with a value corresponding to the monetary value of the new (regular) token. Accordingly, the null level v0' of the token portion is lowered with respect to the first time t1, meaning that the share of assets available as tokens increased over the first time t1, since the overall assets remain constant or even decrease (due to new token issuance fees or the like). In other words, the token portion increased on cost of the non-token portion. The token portion and the non-token portion remain synchronized upon issuance of the new token. Paying for the new token is synchronized with debiting the reference account of the secure hardware unit.

The time diagram of Fig. 2b represents minting a pocket token PT according to an aspect of the disclosure. The time diagram includes the horizontal axis representing the time dimension t and the vertical axis representing the assets dimension as described with respect to Fig. 2a.

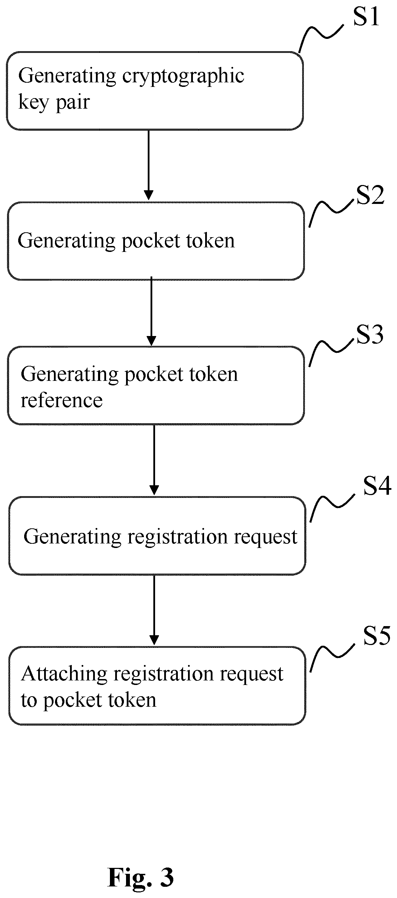

Between the first time t1 and the second time t2, the user of the secure hardware unit SH requested a pocket token, i. e., a new locally minted token, which is depicted by the diagonally hatched rectangle. The secure hardware unit SH completed the steps for locally minting the pocket token as described, e. g., with respect to Fig. 3. In contrast to the conventional situation depicted in Fig. 2a, the non-token portion at the second time t2 has not decreased at the cost of the requested value vR assigned to the pocket token PT. The requested value vR is depicted on the assets dimension with respect to the null level v0 of the token portion. In contrast to the conventional situation, the null level v0 remains constant between the first time t1 and the second time t2, including the first time t1 and the second time t2. The monetary value corresponding to the pocket token PT is added to the assets resulting in a synchronization lag between the token portion and the non-token portion. At the second time t2, it appears that the secure hardware unit SH has created additional assets. This asynchrony is caused by allowing the secure hardware unit SH in an offline environment to locally mint a pocket token PT without any (immediate) possibility of charging the reference account accordingly.

Between the second time t2 and the third time t3, the secure hardware unit SH has resumed an online connection to the electronic payment transaction system TS. Moreover, the pocket token PT has been registered or at least settled. Accordingly, the non-token portion of the users' assets has been charged by a value corresponding to the requested value vR of the pocket token PT, such that the null level v0' of the token portion is lowered compared to the second time t2 and the first time t1, meaning that the share of assets available as tokens increased over the first time t1. In case the pocket token PT has already been transmitted during an offline transaction, the token portion would not include the monetary value associated with the pocket token PT. Accordingly, the diagonally hatched rectangle is framed with dashed lines at the third time t3. At the third time t3, the requested value vR associated with the pocket token PT has been settled with the reference account, i. e., has been eventually paid for by the end user, such that the token portion and the non-token portion are synchronized again.

In Fig. 3 a schematic flow chart of an exemplary method according to an aspect of the disclosure is depicted. The method may be executed by the secure hardware unit SH, in particular exclusively by the secure hardware unit SH, i. e., not by another entity of the electronic payment transaction system TS, in particular not by a token issuing unit or any other central authority, entity or unit. The order of the method steps is not limited to the one shown in Fig. 3a.

The method includes a first step S1, according to which a cryptographic key pair r, R is generated. The cryptographic key pair r, R may satisfy the requirements for cryptographic key pairs on which tokens are conventionally based.

The method includes a second step S2, according to which the pocket token PT is generated. The third step includes assigning a requested value vR to the cryptographic private key r.

The method includes a third step S3, according to which a pocket token reference PTR is generated by assigning the requested value vR to the cryptographic public key R.

The method includes a fourth step S4, according to which a registration request RR is generated. The registration request RR includes the pocket token reference PTR and an identifier which is configured to identify the secure hardware unit (SH).

The method includes a firth step S5, according to which the registration request RR is attached to the pocket token PT, thereby providing, e. g., during an offline token transaction with a further secure hardware unit (not shown), the pocket token as individual credit.

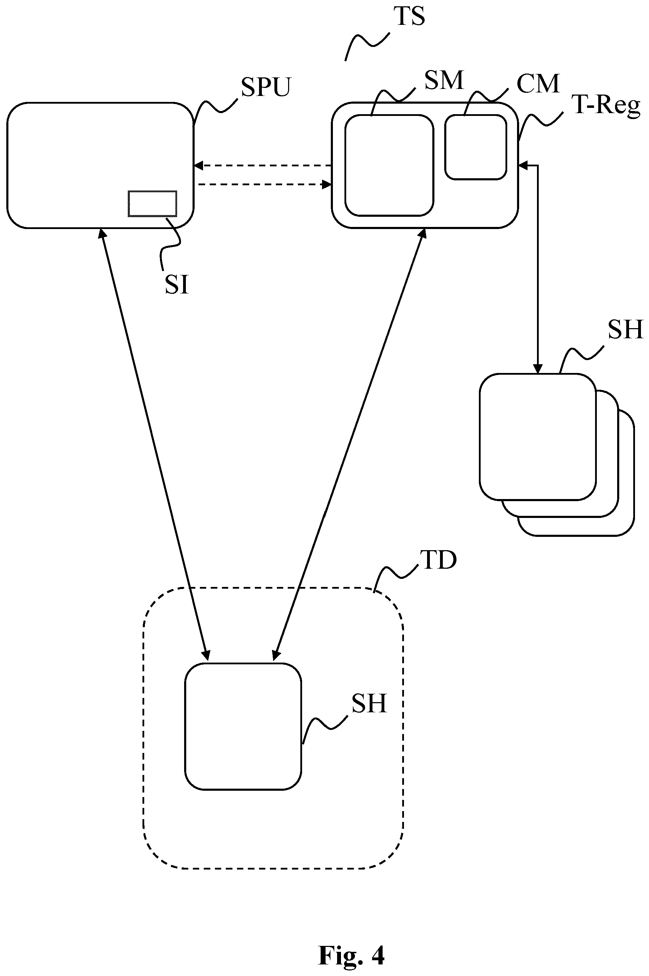

In Fig. 4 an exemplary embodiment of an electronic payment transaction system TS including at least one secure hardware unit SH according to an aspect of the disclosure is depicted. The secure hardware unit SH may be optionally hosted in a terminal device TD, which may provide a communication interface for communication with central authorities, entities or units in the electronic payment transaction system TS.

The electronic payment transaction system TS further includes a service provider unit SP, preferably a financial service provider unit, which is identified by an identifier SI. The service provider unit SP may be a liable party and/or the issuer of the secure hardware unit SH.

The electronic payment transaction system TS further includes a secure token reference register T-Reg. The secure token reference register T-Reg may be configured to register token references, thereby enabling an online verification service of tokens T or pocket tokens PT received in transactions within the electronic payment transaction system TS.

The electronic payment transaction system TS may include a bidirectional communication channel between the service provider unit SP and the secure token reference register T-Reg.

For instance, the secure token reference register T-Reg may be configured to register a pocket token PT upon receiving a registration request including the pocket token reference PTR and the identifier ID. Preferably, the secure token reference register T-Reg or its control module CM is configured to directly check the validity of the pocket token reference PTR, in particular by verifying a signature of the registration request RR, and/or the identifier ID of the secure hardware unit SH. In some embodiments, the secure token reference register T-Reg may delegate this check of the validity of the pocket token reference to a dedicated check unit of the electronic payment transaction system TS.

The secure token reference register T-Reg may be also configured to mark/set/register a pocket token reference PTR as valid upon receiving the registration request and/or a notification (payment confirmation) of the service provider unit SP in course of executing a settlement request.

The secure token reference register T-Reg may further notify the service provider unit SP to conduct a settlement of the requested value vR associated with a pocket token PT upon receiving teh registration request RR.

The secure token reference register T-Reg may be configured to store the pocket token reference PTR along with its validity status in a storage module SM.

Due to this interplay between the secure token reference register T-Reg, the service provider unit SP and the secure hardware unit(s) SH, the secure hardware unit SH may be empower to locally mint a pocket token PT, i. e., a special type of token, which may be used subsequently in an electronic payment transaction, in particular in an offline electronic payment transaction.

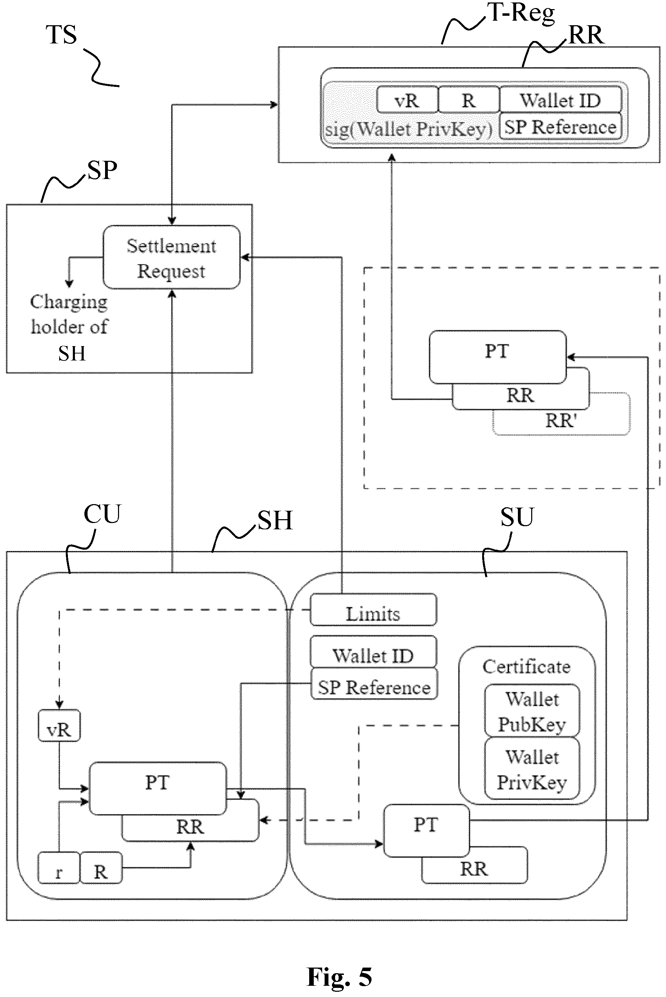

In Fig. 5 a further exemplary embodiment of an electronic payment transaction system TS according to the disclosure is depicted. This schematic further includes a sketch of the overall pocket token PT minting process.

The secure hardware unit SH may generate a pocket token PT based on a new cryptographic key pair r, R, as described with respect to Fig. 1-4. The control unit CU of the secure hardware unit SH further generates a registration request RR. The registration request RR includes an identifier ID configured to identify the secure hardware unit SH, also referred to as Wallet ID in the example of Fig. 5. The Wallet ID may include a SP reference, i. e., an identifier SI of the service provider unit SP, preferably a financial service provider such as a commercial bank. The control unit CU attaches the registration request RR to the pocket token PT and may store the pocket token PT in the storage unit SU.

In the storage unit SU, a configuration of limits or a predetermined minting threshold may be stored. Based on the predetermined minting threshold, the requested value vR of the pocket token PT may be approved or denied. The limits may be set by the service provider unit SP.

Moreover, in the storage unit SU, the Wallet ID and the SP reference may be stored. In addition, a certificate of the secure hardware unit SH may be stored in the storage unit SU. The certificate may include (a reference to) a private key and a public key of the secure hardware unit SH. Based on the certificate, more precisely by using the private key of the secure hardware unit SH, the registration request RR may be signed.

The secure hardware unit SH may be configured to use the pocket token PT within a payment ecosystem (depicted by the dashed rectangle in Fig. 5) of the electronic payment transaction system TS, i. e., may use the pocket token PT in an electronic payment transaction. Thereby, an additional registration request RR' may be attached to the pocket token PT: The original registration request RR generated by the secure hardware unit SH that minted the pocket token PT is required to remain attached to the pocket token at least until registration of the pocket token PT.

The secure hardware unit SH or a transaction partner thereof may transmit the registration request RR to the secure token reference register T-Reg. In Fig. 5, an example of the content of a registration request RR as received by the secure token reference register T-Reg is schematically depicted.

The secure token reference register T-Reg may be configured to generate and transmit a settlement request to the service provider unit SP in charge of the secure hardware unit SH as identified based on the identifier ID. The secure token reference register T-Reg may debit a real-time gross settlement account of the service provider unit SP with a value corresponding to the requested value vR.

The service provider unit SP, upon being charged for the pocket token PT, may debit the reference account of the secure hardware unit SH, thereby charging the holder to the secure hardware unit SH.

In some embodiments, the control unit CU of the secure hardware unit SH may be configured to directly settle the requested value vR of the pocket token PT with the service provider unit SP upon resuming connection to the internet.

### Reference signs

- TD: Terminal device
- SH: Secure hardware unit
ID Identifier of the secure hardware unit
CU Control unit
SU Storage unit
- PT: Pocket token
r cryptographic private key
- PTR: Pocket token reference
R cryptographic public key
- RR: Registration request
- TS: Electronic payment transaction system
- SP: Service provider unit
SI Identifier of the service provider unit
- T-Reg: Token reference register
CM Control module
SM Storage module

## Claims

1. A secure hardware unit (SH) for establishing individual credit in an electronic payment transaction system (TS), the secure hardware unit (SH) comprising:
a storage unit (SU) which is configured to store one or more tokens or a link to one or more tokens; and
a control unit (CU) which is in an offline environment configured to:
generate a token individual cryptographic key pair (r, R) comprising a cryptographic private key (r) and a cryptographic public key (R);
select a requested value (vR), wherein the requested value (vR) is asynchronous to assets on a reference account of the secure hardware unit (SH);
generate a pocket token reference (PTR) by assigning the requested value (vR) to the cryptographic public key (R);
generate a pocket token (PT) by assigning the requested value (vR) to the cryptographic private key;
generate a registration request (RR) including the pocket token reference (PTR) and an identifier (ID) configured to identify the secure hardware unit (SH) within the electronic payment transaction system (TS); and
attach the registration request (RR) to the pocket token (PT), thereby provide the pocket token (PT) as individual credit for an electronic payment transaction.

2. The secure hardware unit (SH) of claim 1, wherein the control unit (CU) is configured to sign the pocket token reference (PTR) and/or the registration request (RR) with a predetermined cryptographic private key stored in the storage unit (SU).

3. The secure hardware unit (SH) of claim 1 or 2, wherein the control unit (CU) is further configured to include a pocket token minting command (PTC) in the registration request (RR).

4. The secure hardware unit (SH) of any of the preceding claims, wherein the identifier (ID) includes an identifier of a service provider (SP) of the secure hardware unit (SH) or a reference to the identifier of the service provider (SP), and/or wherein the identifier (ID) is a public key of the secure hardware unit (SH).

5. The secure hardware unit (SH) of any of the preceding claims, wherein the control unit (CU) is configured to compare the requested value (vR) against a predetermined minting threshold configured in the secure hardware unit (SH), wherein the control unit (CU) is only configured to generate the pocket token (PT) if the requested value (vR) is smaller than the predetermined minting threshold; or
wherein the control unit (CU) is configured to add the requested value (vR) to a value sum and to compare the value sum against a predetermined minting threshold, wherein the control unit (CU) is only configured to generate the pocket token (PT) if the value sum is smaller than the predetermined minting threshold.

6. The secure hardware unit (SH) of the preceding claim, wherein the predetermined minting threshold is stored in the storage unit (SU), preferably wherein the predetermined minting threshold is set by the service provider unit (SP).

7. The secure hardware unit (SH) of any of the preceding claims,
wherein the control unit (CU) is further configured to store a copy of the pocket token reference (PTR) in the storage unit (SU), wherein the control unit (CU) is further configured to generate a further registration request including the copy of the pocket token reference (PTR) and the identifier (ID); and/or
wherein the control unit (CU) is further configured to store a copy of the registration request (RR) in the storage unit (SU).

8. The secure hardware unit (SH) of any of the preceding claims, wherein the control unit (CU) is further configured to transmit the registration request (RR) to a secure token reference register (T-Reg) for settling or synchronizing the requested value (vR) with the assets on the reference account of the secure hardware unit (SH).

9. The secure hardware unit (SH) of the preceding claim, wherein the control unit (CU) is further configured to receive a response from and/or generated by the secure token reference register (T-Reg); and to reset the value sum when the response includes a registration confirmation, preferably by zeroing the value sum.

10. A method for establishing individual credit in an electronic payment transaction system (TS), wherein the method is configured to be executed by a control module (CU) of a secure hardware unit (SH), wherein the method comprises:
generating a token individual cryptographic key pair (r, R) comprising a cryptographic private key (r) and a cryptographic public key (R);
selecting a requested value (vR), wherein the requested value (vR) is asynchronous to assets on a reference account of the secure hardware unit (SH);
generating a pocket token reference (PTR) by assigning the requested value (vR) to the cryptographic public key (R);
generating a pocket token (PT) by assigning the requested value (vR) to the cryptographic private key;
generating a registration request (RR) including the pocket token reference (PTR) and an identifier (ID) configured to identify the secure hardware unit (SH) within the payment system; and
attaching the registration request (RR) to the pocket token (PT), thereby providing the pocket token (PT) as individual credit for an electronic payment transaction.

11. The method of claim 10, further comprising signing the registration request (RR) with a predetermined cryptographic private key stored in a storage unit (SU) of the secure hardware unit (SH); and/or
storing or archiving a copy of the pocket token reference (PTR), the registration request (RR) and/or the pocket token (PT) in the storage unit (SU); and/or
comparing the requested value (vR) or a requested accumulated value against a predetermined minting threshold configured in the secure hardware unit (SH), wherein generating the pocket token (PT) only if the requested value (vR) or the requested accumulated value is smaller than the predetermined minting threshold.

12. A secure token reference register (T-Reg) for registration and/or verification of tokens within an electronic payment transaction system (TS), the secure token reference register (T-Reg) comprising a control module (CM) and a storage module (SM), wherein the control module (CM) is configured to:
receive a first registration request generated by a secure hardware unit of the electronic payment transaction system (TS), wherein the first registration request includes a token reference (TR);
store the token reference (TR) in the storage module (SM), thereby registering a corresponding token (T);
receive a second registration request (RR) generated by a secure hardware unit (SH) according to any of claims 1-9;
extract the identifier (ID) from the second registration request (RR);
settle the requested value with a service provider unit (SP) of the secure hardware unit (SH) according to any of claims 1-9 based on the identifier (ID);
upon receiving a settlement confirmation from the service provider unit (SP), store the pocket token reference (PTR) in the storage module (SM), thereby registering the pocket token (PT); and
preferably, transmit a response to the secure hardware unit and/or the secure hardware unit (SH) according to any of claims 1-9, the response including a registration confirmation.

13. An electronic payment transaction system (TS) comprising:
a plurality of secure hardware units (SH) of which at least one secure hardware unit (SH) is configured according to any of the claims 1-9;
a secure token reference register (T-Reg) according to claim 12; and
a service provider unit (SP) of the at least one secure hardware unit (SH) configured according to any of the claims 1-9.

14. The system (TS) of claim 13,
wherein the secure token reference register (T-Reg) is further configured to:
transmit a settlement request which is or includes the registration request (RR) to the service provider unit (SP) for settling the requested value (vR); and
receive the settlement confirmation from and/or generated by the service provider unit (SP);
or
wherein the at least one secure hardware unit (SH) is configured to:
transmit a settlement request which is or includes the registration request (RR) directly to the service provider unit (SP) or a further service provider unit for settling the requested value (vR), preferably upon resuming an online connection; and
receive the settlement confirmation from and/or generated by the service provider unit (SP);
and
wherein the service provider unit (SP) is configured to:
receive the settlement request and to debit the reference account of the secure hardware unit (SH) with a value corresponding to the requested value (vR); and
upon successfully debiting the reference account, provide the settlement confirmation.

15. The system (TS) of claim 13 or 14, wherein the service provider unit (SP) is further configured to:
generate a replacement request to replace the pocket token (PT) with an issuable token of the service provider unit (SP), the issuable token including a monetary value that corresponds to or equals the requested value (vR), wherein the replacement request includes the pocket token reference (PTR) as input token reference and a token reference of the issuable token as output token reference; and
transmit the replacement request to the secure token reference register (T-Reg), preferably by way of the settlement confirmation, for registering the issuable token, thereby converting the pocket token (PT) to the issuable token.

16. A computer-readable storage medium on which instructions are stored, which, when executed by a secure hardware unit (SH) according to any of the claims 1-9, configure the control unit (CU) of the secure hardware unit (SH) to execute the method according to claim 10 or 11.

## Amended claims

### Amended claims in accordance with Rule 137(2) EPC.

1. A secure hardware unit (SH) for establishing individual credit in an electronic payment transaction system (TS), the secure hardware unit (SH) comprising:
a storage unit (SU) which is configured to store one or more tokens or a link to one or more tokens; and
a control unit (CU) which is in an offline environment configured to:
generate a token individual cryptographic key pair (r, R) comprising a cryptographic private key (r) and a cryptographic public key (R);
select a requested value (vR), wherein the requested value (vR) is asynchronous to assets on a reference account of the secure hardware unit (SH);
generate a pocket token reference (PTR) by assigning the requested value (vR) to the cryptographic public key (R);
generate a pocket token (PT) by assigning the requested value (vR) to the cryptographic private key;
generate a registration request (RR) including the pocket token reference (PTR) and an identifier (ID) to settle the requested value with the assets on the reference account of the secure hardware unit (SH), the identifier (ID) being configured to identify the secure hardware unit (SH) within the electronic payment transaction system (TS); and
attach the registration request (RR) to the pocket token (PT), thereby provide the pocket token (PT) as individual credit for an electronic payment transaction.

2. The secure hardware unit (SH) of claim 1, wherein the control unit (CU) is configured to sign the pocket token reference (PTR) and/or the registration request (RR) with a predetermined cryptographic private key stored in the storage unit (SU).

3. The secure hardware unit (SH) of claim 1 or 2, wherein the control unit (CU) is further configured to include a pocket token minting command (PTC) in the registration request (RR).

4. The secure hardware unit (SH) of any of the preceding claims, wherein the identifier (ID) includes an identifier of a service provider (SP) of the secure hardware unit (SH) or a reference to the identifier of the service provider (SP), and/or wherein the identifier (ID) is a public key of the secure hardware unit (SH).

5. The secure hardware unit (SH) of any of the preceding claims, wherein the control unit (CU) is configured to compare the requested value (vR) against a predetermined minting threshold configured in the secure hardware unit (SH), wherein the control unit (CU) is only configured to generate the pocket token (PT) if the requested value (vR) is smaller than the predetermined minting threshold; or
wherein the control unit (CU) is configured to add the requested value (vR) to a value sum and to compare the value sum against a predetermined minting threshold, wherein the control unit (CU) is only configured to generate the pocket token (PT) if the value sum is smaller than the predetermined minting threshold.

6. The secure hardware unit (SH) of the preceding claim, wherein the predetermined minting threshold is stored in the storage unit (SU), preferably wherein the predetermined minting threshold is set by the service provider unit (SP).

7. The secure hardware unit (SH) of any of the preceding claims,
wherein the control unit (CU) is further configured to store a copy of the pocket token reference (PTR) in the storage unit (SU), wherein the control unit (CU) is further configured to generate a further registration request including the copy of the pocket token reference (PTR) and the identifier (ID); and/or
wherein the control unit (CU) is further configured to store a copy of the registration request (RR) in the storage unit (SU).

8. The secure hardware unit (SH) of any of the preceding claims, wherein the control unit (CU) is further configured to transmit the registration request (RR) to a secure token reference register (T-Reg) for settling or synchronizing the requested value (vR) with the assets on the reference account of the secure hardware unit (SH).

9. The secure hardware unit (SH) of the preceding claim, wherein the control unit (CU) is further configured to receive a response from and/or generated by the secure token reference register (T-Reg); and to reset the value sum when the response includes a registration confirmation, preferably by zeroing the value sum.

10. A method for establishing individual credit in an electronic payment transaction system (TS), wherein the method is configured to be executed by a control module (CU) of a secure hardware unit (SH), wherein the method comprises:
generating a token individual cryptographic key pair (r, R) comprising a cryptographic private key (r) and a cryptographic public key (R);
selecting a requested value (vR), wherein the requested value (vR) is asynchronous to assets on a reference account of the secure hardware unit (SH);
generating a pocket token reference (PTR) by assigning the requested value (vR) to the cryptographic public key (R);
generating a pocket token (PT) by assigning the requested value (vR) to the cryptographic private key;
generating a registration request (RR) including the pocket token reference (PTR) and an identifier (ID) configured to identify the secure hardware unit (SH) within the payment system; and
attaching the registration request (RR) to the pocket token (PT), thereby providing the pocket token (PT) as individual credit for an electronic payment transaction.

11. The method of claim 10, further comprising signing the registration request (RR) with a predetermined cryptographic private key stored in a storage unit (SU) of the secure hardware unit (SH); and/or
storing or archiving a copy of the pocket token reference (PTR), the registration request (RR) and/or the pocket token (PT) in the storage unit (SU); and/or
comparing the requested value (vR) or a requested accumulated value against a predetermined minting threshold configured in the secure hardware unit (SH), wherein generating the pocket token (PT) only if the requested value (vR) or the requested accumulated value is smaller than the predetermined minting threshold.

12. A secure token reference register (T-Reg) for registration and/or verification of tokens within an electronic payment transaction system (TS), the secure token reference register (T-Reg) comprising a control module (CM) and a storage module (SM), wherein the control module (CM) is configured to:
receive a first registration request generated by a secure hardware unit of the electronic payment transaction system (TS), wherein the first registration request includes a token reference (TR);
store the token reference (TR) in the storage module (SM), thereby registering a corresponding token (T);
receive a second registration request (RR) generated by a secure hardware unit (SH) according to any of claims 1-9;
extract the identifier (ID) from the second registration request (RR);
settle the requested value with a service provider unit (SP) of the secure hardware unit (SH) according to any of claims 1-9 based on the identifier (ID);
upon receiving a settlement confirmation from the service provider unit (SP), store the pocket token reference (PTR) in the storage module (SM), thereby registering the pocket token (PT); and
preferably, transmit a response to the secure hardware unit and/or the secure hardware unit (SH) according to any of claims 1-9, the response including a registration confirmation.

13. An electronic payment transaction system (TS) comprising:
a plurality of secure hardware units (SH) of which at least one secure hardware unit (SH) is configured according to any of the claims 1-9;
a secure token reference register (T-Reg) according to claim 12; and
a service provider unit (SP) of the at least one secure hardware unit (SH) configured according to any of the claims 1-9.

14. The system (TS) of claim 13,
wherein the secure token reference register (T-Reg) is further configured to:
transmit a settlement request which is or includes the registration request (RR) to the service provider unit (SP) for settling the requested value (vR); and
receive the settlement confirmation from and/or generated by the service provider unit (SP);
or
wherein the at least one secure hardware unit (SH) is configured to:
transmit a settlement request which is or includes the registration request (RR) directly to the service provider unit (SP) or a further service provider unit for settling the requested value (vR), preferably upon resuming an online connection; and
receive the settlement confirmation from and/or generated by the service provider unit (SP);
and
wherein the service provider unit (SP) is configured to:
receive the settlement request and to debit the reference account of the secure hardware unit (SH) with a value corresponding to the requested value (vR); and
upon successfully debiting the reference account, provide the settlement confirmation.

15. The system (TS) of claim 13 or 14, wherein the service provider unit (SP) is further configured to:
generate a replacement request to replace the pocket token (PT) with an issuable token of the service provider unit (SP), the issuable token including a monetary value that corresponds to or equals the requested value (vR), wherein the replacement request includes the pocket token reference (PTR) as input token reference and a token reference of the issuable token as output token reference; and
transmit the replacement request to the secure token reference register (T-Reg), preferably by way of the settlement confirmation, for registering the issuable token, thereby converting the pocket token (PT) to the issuable token.

16. A computer-readable storage medium on which instructions are stored, which, when executed by a secure hardware unit (SH) according to any of the claims 1-9, configure the control unit (CU) of the secure hardware unit (SH) to execute the method according to claim 10 or 11.
